# EUROPÄISCHE PATENTSCHRIFT

(11) **EP 1 935 714 B1**
(45) Veröffentlichungstag und Bekanntmachung des Hinweises auf die Patenterteilung: **31.03.2010**
(21) Anmeldenummer: 06026179.9
(22) Anmeldetag: 18.12.2006
(51) Int. Cl.: B60Q 1/04, B62D 65/16

(54) **Verfahren und Vorrichtung zur Montage von Scheinwerfern an Montageträgern**
Method and device for mounting floodlights on mounting structures
Procédé et dispositif destinés au montage de phares sur des supports de montage

(43) Veröffentlichungstag der Anmeldung: 25.06.2008
(73) Patentinhaber: HBPO GmbH, 59557 Lippstadt (DE)
(72) Erfinder: Plohmann, Michael, 59558 Lippstadt (DE); Brass, Frank, OX161AA Banbury (GB)
(74) Vertreter: Ostermann, Thomas

(56) Entgegenhaltungen:
- DE-A1- 19 612 479
- DE-A1- 19 949 467
- DE-A1-102004 005 978
- DE-A1-102005 046 793
- US-A1- 2004 160 784

## Beschreibung

Die Erfindung betrifft ein Verfahren zur lagerichtigen Montage von Scheinwerfern an einem Montageträger eines Frontends für Fahrzeuge, wobei ein Gehäuse des Scheinwerfers nach Berechnung eines Toleranzausgleichs über Verbindungspunkte desselben an Aufnahmepunkte des Montageträger positioniert und fixiert wird, wobei der Montageträger an einem Montagegestell befestigt wird, wobei eine Ist-Position des Scheinwerfers erfasst und einer Recheneinheit zugeleitet wird, wobei in der Recheneinheit eine Korrekturposition berechnet wird, so dass die Verbindungspunkte des Scheinwerfers relativ zu Aufnahmepunkten des Montageträgers in eine Soll-Position verbracht werden, in der die Fixierung des Scheinwerfers an dem Montageträger erfolgt.

Ferner betrifft die Erfindung eine Vorrichtung zur lagerichtigen Montage von Scheinwerfern an einem Montageträger eines Frontends für Fahrzeuge, wobei der Montageträger Befestigungspunkte zur Befestigung desselben an dem Fahrzeug einerseits und Aufnahmepunkte zur Verbindung an vereinelungspunkten des Scheinwerfers andererseits aufweist, mit einem Montagegestellt, an dem der Montageträger über fahrzeuggleiche Befestigungsstellen befestigt ist, mit Messmitteln zum Erfassen der Ist-Position des Scheinwerfers, mit einer Recheneinheit, aus der aus der Sollposition und der Ist-Position des Scheinwerfers eine Korrekturposition für den Scheinwerfer berechnet wird, mit Stellmitteln zum verbringen des Scheinwerfers unter Vorgabe der von der Recheneinheit bereitgestellten Korrekturposition in die Sollposition, in der der Scheinwerfer mit dem Montageträger fixierbar ist.

Ferner betrifft die Erfindung ein Frontend für Fahrzeuge.

Aus der US 2004/0160784 A1 ist eine Montagevorrichtung für Scheinwerfer mit einem Montagegestell bekannt, an dem eine Scheinwerfereinstelleinheit befestigt ist, mittels derer die Montageposition des Scheinwerfers vorgebende Anschläge positioniert werden können. Zur Positionierung dieser Anschläge weist die Scheinwerfereinstelleinheit Stellmittel sowie Mittel zur Erfassung der Position dieser Stellmittel auf. Nach entsprechender Positionierung der Anschläge wird der Scheinwerfer unter Anlage seines Gehäuses an den Anschlägen an den Montageträger angelegt und an diesem befestigt. Die Stellmittel verbringen die Anschläge sodann in eine Ausgangsposition zurück, in der der Scheinwerfer nicht mehr an den Anschlagen anliegt. Über Messmittel, die ortsfest an dem Montagegestell befestigt sind, wird anschließend die Ist-Position des Scheinwerfers ermittelt und mit einer Soll-Position des Scheinwerfers verglichen.

Weichen Ist-Position und Soll-Position voneinander ab, wird der Scheinwerfer vom Montageträger demontiert und der Montageprozess von Neuem durchlaufen. Nachteilig ist hierbei, dass die korrekte Positionierung des Scheinwerfers erst nach der Montage geprüft wird. Sofern der Scheinwerfer fehlerhaft montiert ist, muss der Montageprozess gegebenenfalls mehrfach wiederholt werden. Unter Kosten- und zeitgesichtspunkten, ist diese erneute Montage sehr nachteilig zu bewerten.

Aus der gattungsgemäßen DE 10 2004 005 978 B4 ist ein Verfahren zur lagerichtigen Montage von Scheinwerfern um einen Montageträger eines Frontends für Fahrzeuge bekannt, nachdem ein Gehäuse des Scheinwerfer zuerst relativ zu dem Montageträger ausgerichtet und erst dann an demselben positioniert und fixiert wird. Zur Ausrichtung des Scheinwerfers gegenüber dem Montageträger wird ein Toleranzausgleich berechnen, wobei ist-Positionen von Aufnahmepunkten des Montageträgers erfasst und einer Recheneinheit zugeleitet werden. Zum anderen werden Ist-Positionen von Referenzpunkten des Scheinwerfers an einer Messlehre aufgenommen und der Recheneinheit zugeleitet. In der Recheneinheit werden aufgrund der so ermittelten Ist-Position des Montageträger einerseits und der Ist-Position des Scheinwerfers andererseits Korrekturpositionen berechnet, so dass das Scheinwerfergehäuse in die Soll-Position verbracht und über Verbindungspunkte des Scheinwerfers an den Aufnahmepunkten des Montageträgers fixiert wird. Nachteilig an dem bekannten Verfahren ist, dass infolge der zweifachen Erfassung von Ist-Lagen des Scheinwerfers und des Montageträgers die Montagezeit relativ groß ist. Nachteilig ist ferner, dass zur Aufnahme von Referenzpunkten des Scheinwerfers eine Messlehre erforderlich ist.

Aufgabe der vorliegende Erfindung ist es, ein Verfahren und eine Vorrichtung zur lagerichtigen Montage von Scheinwerfern an einem Montageträger bzw. ein Fronten für Fahrzeuge derart anzugeben, dass mit geringem Montageaufwand eine weitgehend toleranzfreie Befestigung des Scheinwerfers an einem Montageträger gewährleistet ist.

Zur Lösung dieser Aufgabe ist das erfindungsgemäße Verfahren in Vebindung mit dem Oberbegriff des Patentanspruchs 1 dadurch gekennzeichnet, dass eine Scheinwerfereinstelleinheit zum einen über vorgegebene Anschläge mit dem Montagegestell und zum anderen mit dem Scheinwerfer verbunden wird, dass die Ist-Position des Scheinwerfers zunächst mittels in der Scheinwerfereinstelleinheit integrierter Messmittel erfasst wird und dass der Scheinwerfer danach mittels in der Scheinwerfereinstelleinheit integrierter Stellmittel in die Soll-Position verbracht wird.

Der besondere Vorteil der Erfindung besteht darin, dass eine Verkürzung der Montagezeit einerseits und eine verbesserte Ausrichtung/Positionierung des Scheinwerfers zu dem Montageträger für die Befestigung an demselben andererseits erzielt werden. Grundgedanke der Erfindung ist es, eine feste Zuordnung bzw. eine feste Kopplung zwischen einer Scheinwerfereinstelleinheit und einem dem Montageträger tragenden Montagegestell einerseits und mit dem Scheinwerfer andererseits herzustellen. Dadurch, dass der Montageträger auch fest an dem Montagegestell gekoppelt ist, ergibt sich zwischen den genannten Komponenten eine starre Kopplung, wobei lediglich die Kopplung zwischen dem Scheinwerfer und dem Montageträger Freiheitsgrade, vorzugsweise drei Freiheitsgrade, aufweist. Die starre Kopplungskette "Montageträger-Montagegestell-Scheinwerfer-Scheinwerfereinstelleinheit" ermöglicht, dass zur Ausrichtung des Scheinwerfers relativ zum Montageträger lediglich die Ist-Positionen des Scheinwerfers erfasst werden müssen. Die Ist-Positionen des Montageträgers sind in einer Recheneinheit hinterlegt und brauchen nicht verändert werden, da eine stets gleiche mechanische Kopplung zwischen dem Montageträger und der Scheinwerfereinstelleinheit gegeben ist. Sobald die Ist-Positionen des Scheinwerfers erfasst worden sind, können in der Recheneinheit relativ schnell durch Vergleich mit den hinterlegten Ist-Positionen des Montageträgers Korrekturpositionen für die Verbindungspunkte des Scheinwerfers berechnet und stellmitteln übergeben werden, mittels derer die Verbindungspunkte des Scheinwerfers in die Soll-Position verbracht werden, in der sie an Aufnahmepunkten des Montageträgers fixiert werden. Nachfolgend kann der den Scheinwerfer enthaltenden Montageträger von dem Montagegestell gelöst und als Frontend an einem Fahrzeug verbaut werden.

Die Erfindung ermöglicht vorteilhaft zum einen eine Verringerung der Montagezeit und zum anderen eine genauere Positionen bzw. Fixierung des Scheinwerfers an dem Montageträger. Vorteilhaft wird zur Aufnahme des Scheinwerfers keine Messlehre benötigt. Darüber hinaus können vorteilhaft Fehlerquellen bei der Herstellung von Komponenten des Frontends ermittelt werden. Die Mess- bzw. Positionsdaten können zum Zwecke der Qualitätssicherung weiterverarbeitet werden. Es ergibt sich hierdurch quasi eine 100 %-Vermessung.

Nach einer Weiterbildung des erfindungsgemäßen Verfahrens erfolgt nach Positionierung des Scheinwerfergehäuses in der Soll-Position sowie vor und/oder nach der Fixierung des Scheinwerfergehäuses an dem Montageträger eine weitere Positionsbestimmung des Scheinwerfers mittels der Messmittel. Durch nachfolgenden Vergleich dieser aktuellen Ist-Position des Scheinwerfers innerhalb der Recheneinheit. Mit den dort abgespeicherten Soll-Vorgaben kann gegebenenfalls eine Korrektur der Positionierung bzw. Fixierung des Scheinwerfers erfolgen. Erst wenn das Scheinwerfergehäuse relativ zu dem Montageträger innerhalb eines Lagetoleranzbandes positioniert ist, erfolgt eine Freigabe der Scheinwerfereinstelleinheit, so dass der Montageträger zusammen mit dem Scheinwerfer von dem Montagegestell getrennt werden kann.

Zur Lösung der Aufgabe ist die erfindungsgemäße Vorrichtung in Verbindung mit dem Oberbegriff des Patentanspruchs 8 dadurch gekennzeichnet, dass in der Recheneinheit die Soll-Position des Scheinwerfers gespeichert ist, dass zumindest die Messmittel und die Stellmittel in einer Scheinwerfereinstelleinheit integriert angeordnet sind, wobei die Scheinwerfereinstelleinheit in einer fest vorgegebenen Ausrichtposition im Verhältnis zu dem Montagegestell und dem Scheinwerfer gelagert ist.

Vorteilhaft ermöglicht die erfindungsgemäße Vorrichtung eine Verkürzung der Montagezeit sowie eine genauere Fixierung des Scheinwerfers an dem Montageträger innerhalb eines vorgegebenen Lagetoleranzbandes.

Nach einer Weiterbildung der erfindungsgemäßen Vorrichtung kann die aktuelle Lage des Scheinwerfers mittels eines als Messtaster ausgebildeten Messmittels an mindestens drei vordefinierten Referenzpunkten ermittelt werden. Der Messaufwand kann hierdurch erheblich reduziert werden.

Nach einer Weiterbildung der Erfindung weist die erfindungsgemäße Vorrichtung Aufnahmemittel zur lösbaren Befestigung derselben an dem Scheinwerfer auf. Auf diese Weise wird eine feste Kopplung zwischen dem scheinwerfer und der scheinwerfereinstelleinheit gewährleistet.

Ein Ausführungsbeispiel der Erfindung wird nachfolgend anhand der Zeichnungen näher erläutert.

Es zeigen:

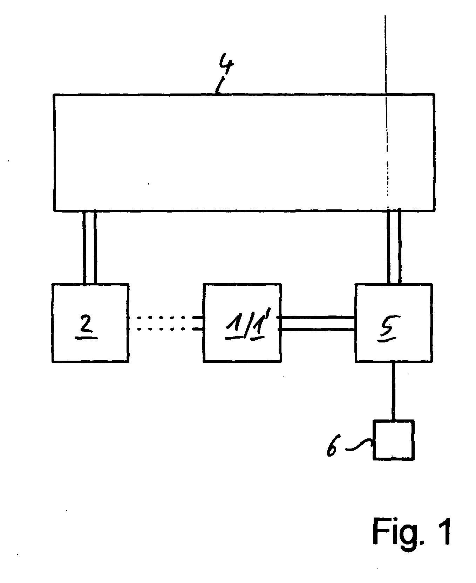

- Figur 1: ein Blockschaltbild einer erfindungsgemäßen Vorrichtung,

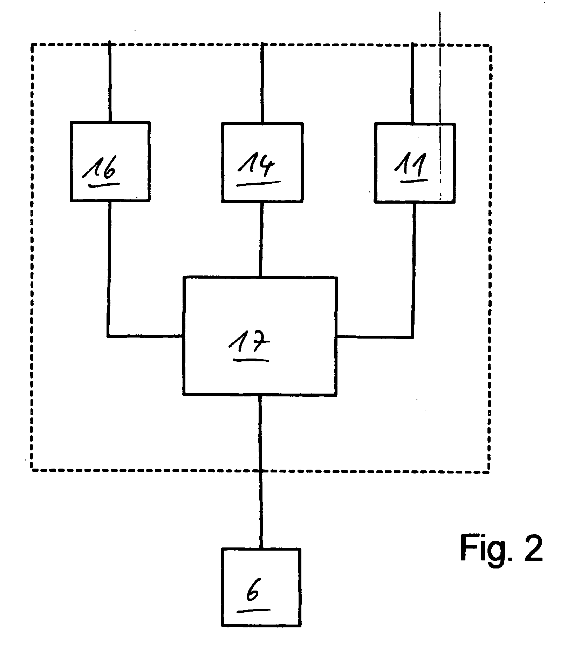

- Figur 2: ein Blockschaltbild einer Scheinwerfereinstelleinheit der erfindungsgemäßen Vorrichtung,

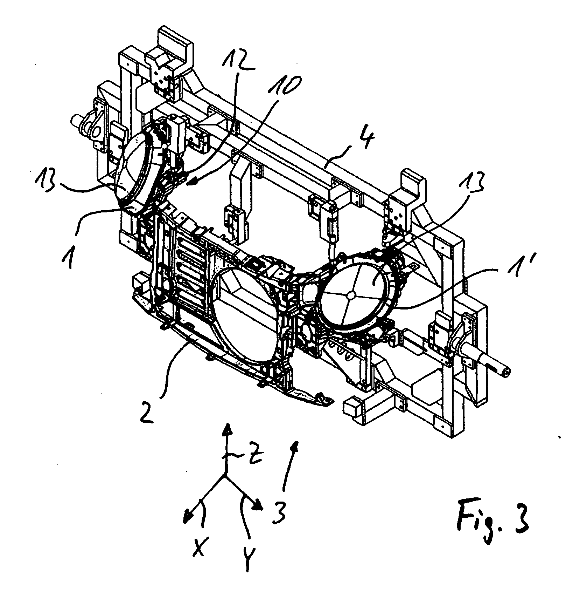

- Figur 3: eine perspektivische Vorderansicht eines mit Scheinwerfern bestückten Montageträgers, der an einem Montagegestell befestigt ist,

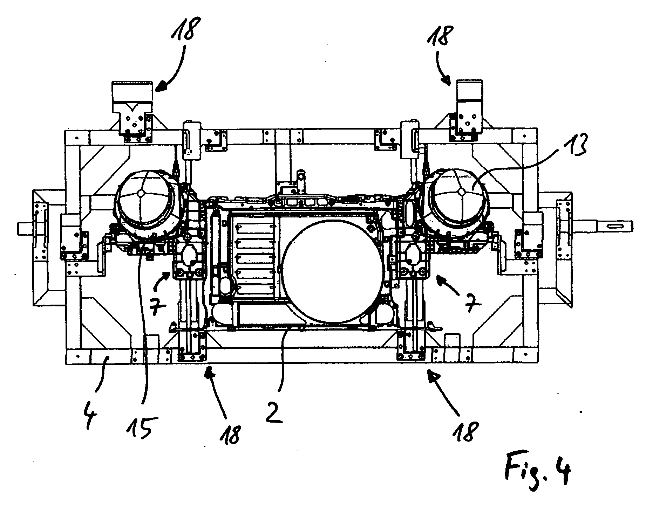

- Figur 4: eine Vorderansicht des an dem Montagegestell befestigten Montageträgers und

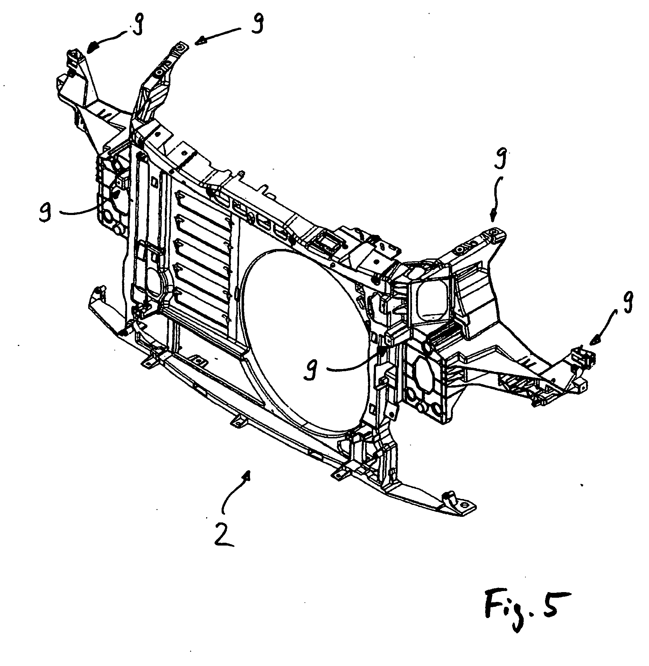

- Figur 5: eine perspektivische Vorderansicht des Montageträgers.

Eine erfindungsgemäße vorrichtung zur lagerichtigen Montage von Scheinwerfern 1, 1' an einem Montageträger 2 eines Frontends 3 für Fahrzeuge besteht im Wesentlichen aus einem Montagegestell 4, einer Scheinwerfereinstelleinheit 5 sowie einer Recheneinheit 6.

Der Montageträger 2 weist zum einen Befestigungspunkte 7 auf zur Befestigung desselben an dem Fahrzeug. Über die Befestigungspunkte 7, die beispielsweise drei Schrauben als Befestigungsmittel aufweisen können, wird der Montageträger 2 an fahrzeuggleichen Befestigungsstellen des Montagegestells 4 befestigt, bevor eine Justierung und Befestigung des Scheinwerfers 1, 1' an dem Montageträger 2 mittels der Scheinwerfereinstelleinheit 5 erfolgt.

Ferner weist der Montageträger 2 Aufnahmepunkte 9 auf, über die der Montageträger 2 mit Verbindungspunkten 10 der Scheinwerfer 1, 1' verbindbar ist.

Die Scheinwerfereinstelleinheit 5, die zur Justierung und Befestigung der Scheinwerfer 1, 1' an dem Montageträger 2 dient, ist während der Montage über nicht dargestellte Befestigungsmittel fest mit dem Montagegestell 4 verbunden. Die Scheinwerfereinstelleinheit 5 weist darüber hinaus mechanische Aufnahmemittel 11 auf, mittels derer sie in einer festen Kopplung zu dem Scheinwerfer 1, 1' bringbar ist. Beispielsweise können die Aufnahmemittel 11 als Backen ausgebildet sein, die an eine ein Gehäuse 12 des Scheinwerfers 1, 1' abdeckenden Abschlussscheibe 13 angelegt werden kann.

Die Scheinwerfereinstelleinheit 5 verfügt über Messmittel 14 zum Erfassen von Ist-Positionen des Scheinwerfers 1, 1'. Die Messmittel 14 können beispielsweise als Messtaster ausgebildet sein, die zur Bestimmung der Lage des Scheinwerfers 1, 1' drei Referenzpunkte der Abschlussscheibe 13 erfasst. Die Referenzpunkte können als Vorzügslinien oder als eine abstehende Rippe 15 ausgebildet sein.

Die Scheinwerfereinstelleinheit 5 verfügt über Stellmittel 16 zum verbringen der Scheinwerfer 1, 1' in eine vorgegebene Soll-Position. Beispielsweise können die Stellmittel 16 als elektromotorisch angetriebene Schieber ausgebildet sein.

Die Scheinwerfereinstelleinheit 5 umfasst eine Steuereinheit 17, die die mechanischen Aufnahmemittel 11, die Messmittel 14 sowie die Stellmittel 16 ansteuert. Die Steuereinheit 17 ist mit der Recheneinheit 6 verbunden, die ortsfern von der Scheinwerfereinstelleinheit 5 oder in derselben integriert angeordnet sein kann.

Im Folgenden wird das erfindungsgemäße Verfahren zur Montage der Scheinwerfer 1, 1' an dem Montageträger 2 näher beschrieben.

Die Scheinwerfer 1, 1' werden über Vorpositionierungsmittel an den Aufnahmepunkten 9 es Montageträgers 2 vorpositioniert. Dabei sind die Scheinwerfer 1, 1' jeweils verschieblich in Y- und Z-Richtung des Fahrzeugs an dem Montageträger 2 gehalten.

Nachfolgend wird die Scheinwerfereinstelleinheit 5 mittels eines Referenz-Punkt-Systems an Anschlägen (Anschlagflächen 18) des Montagegestells 4 starr befestigt. Hierzu weist die Scheinwerfereinstelleinheit 5 entsprechende Befestigungsmittel auf. Gleichzeitig oder im Anschluss werden die Scheinwerfer 1, 1' von den mechanischen Aufnahmemitteln 13 der Scheinwerfereinstelleinheit 5 erfasst, so dass der Scheinwerfer 1, 1' in eine definierte Relativlage zu der Scheinwerfereinstelleinheit 5 sowie dem Montagegestell 4 einnimmt, Nachfolgend wird die Ist-Position des Scheinwerfers 1, 1' durch Erfassen mindestens dreier definierter Referenzpunkte 15 mittels der Messmittel 14 der Scheinwerfereinstelleinheit 5 erfasst. Die entsprechenden Ist-Positionen der Referenzpunkte 15 werden über die Steuereinheit 17 der Scheinwerfereinstelleinheit 5 an die Recheneinheit 6 übertragen. Die Recheneinheit 6 weist einen Speicher auf, in dem die scheinwerfertypabhängigen SollPositionen abgespeichert sind. In der Recheneinheit 6 erfolgt ein Soll-/Ist-Wertvergleich, wobei die Ist-Positionen des Scheinwerfers 1, 1' mit als 3D-CAD-Daten abgespeicherten Soll-Daten der Scheinwerfer 1, 1' verglichen werden. Aufgrund dieses Soll-/Ist-Wertvergleiches werden in der Recheneinheit 6 eine Korrekturposition für den Scheinwerfer 1, 1' berechnet und an die Steuereinheit 17 der Scheinwerfereinstelleinheit 5 übertragen. Die Steuereinheit 17 steuert die Stellmittel 16 in Abhängigkeit von den Korrekturpositionen an, so dass die Scheinwerfer 1, 1' jeweils vorzugsweise in Y-Richtung (horizontale Querachse des Fahrzeugs) und Z-Richtung (vertikale Achse) die Soll-Position in Relation zu dem Montageträger 2 einnehmen.

Nach erfolgter Positionierung der Scheinwerfer 1, 1' erfolgt eine Justage der Verbindungspunkte 10 des Scheinwerfers 1, 1' an dem Montageträger 2. Zu diesem zweck sind an sich bekannte Befestigungselemente, wie eine mit einer zentralschraube verbundene Hohlschraube vorgesehen, die sich spannungsfrei verschrauben lässt. Nach der Justage der Scheinwerfer 1, 1' an dem Montageträger 2 erfolgt die Befestigung (Fixierung) derselben an dem Montageträger 2 mittels Betätigung der zentral schrauben an den verbindungspunkten 10. Nachfolgend werden die mechanischen Aufnahmemittel 13 der Scheinwerfereinstelleinheit 5 von den Scheinwerfern 1, 1' gelöst.

Anschließend erfolgt ein weiterer Soll.-/Ist-Vergleich der Position des Scheinwerfers 1, 1'. Hierzu wird die aktuelle Position des Scheinwerfers 1, 1' erfasst und die Ist-Positionen an die Recheneinheit 6 übertragen. Die Recheneinheit 6 ermittelt die Korrekturpositionen und sendet diese an die Steuereinheit 17 der Scheinwerfereinstelleinheit 5 zurück. Liegen diese Korrekturpositionen innerhalb eines vorgegebenen Lagetoleranzbandes, wird die Verbindung der Scheinwerfereinstelleinheit 5 mit dem Montagegestell 4 gelöst.

Nachfolgend kann der Montageträger 2 zusammen mit den fixierten Scheinwerfern 1, 1' als Frontend von dem Montagegestellt 4 gelöst und für die Montage an dem Fahrzeug bereitgestellt werden.

Nach einer Ausführungsform der Erfindung kann die Überprüfung der Position des Scheinwerfers 1, 1' durch einen Soll-/Ist-Wertvergleich auch vor der Fixierung des Scheinwerfers 1, 1' an dem Montageträger 2, aber nach der Positionierung der Scheinwerfer 1, 1' erfolgen.

Die ermittelten Justier-/Messdaten können für die Qualitätssicherung bzw. -ermittlung von unzulässig hohen Toleranzabweichungen genutzt werden.

Die Scheinwerfereinstelleinheit 5 befindet sich während des Soll/Ist-Vergleichs der Scheinwerfer 1, 1' in einer Ausrichtposition, in der die Scheinwerfereinstelleinheit 5 eine starren Kopplung zu dem Montagegestell 4 aufweist sowie sich die Scheinwerfer 1, 1' in einer festen Relativposition zu der Scheinwerfereinstelleinheit 5 bzw. dem Montageträger 2 befinden.

Das erfindungsgemäße Verfahren ermöglicht die Montage eines Frontends an einer Karosserie eines Fahrzeugs, wobei ein umlaufend gleichmäßiger Spalt bzw. Fuge um die Abschlussscheibe 13 des Scheinwerfers 1, 1' gebildet wird. Der Spalt kann-beispielsweise zwischen der Abschlussscheibe 13 und einem umlaufenden Öffnungsrand einer Motorhaube des Fahrzeugs verlaufen.

## Patentansprüche

1. Verfahren zur lagerichtige Montage von Scheinwerfern (1, 1') an einem Montageträger (2) eines Frontende (3) für Fahrzeuge, wobei ein Gehäuse des Scheinwerfers (1, 1') nach Berechnung eines Toleranzausgleichs über Verbindungspunkte (10) desselben an Aufnahmepunkte (9) des Morztageträge,r (2) positioniert und fixiert wird, wobei der Montageträger (2) an einem Montagegestell (4) befestigt wird, wobei eine Ist-Position des Scheinwerfers (1, 1') erfasst und einer Recheneinheit (6) zugeleitet wird, wobei in der Recheneinheit (6) eine Korrekturposition berechnet wird, so dass die Verbindungspunkte (10) des Scheinwerfers (1, 1') relativ zu den Aufnahmepunkten (9) des Montageträgers (2) in eine Soll-Position verbracht werden, in der die Fixierung des Scheinwerfers (1, 1') an dem Montageträger (2) erfolgt, **dadurch gekennzeichnet,**
- **dass** eine Scheinwerfereinstelleinheit (5) zum einen über vorgegebene Anschläge (18) mit dem Montagegestell (4) und zum anderen mit dem Scheinwerfer (1, 1') verbunden wird,
- **dass** die Ist-Position des Scheinwerfers (1, 1') zunächst mittels in der Scheinwerfereinstelleinheit (5) integrierter Messmittel (14) erfasst wird und
- **dass** der Scheinwerfer (1, 1') danach mittels in der Scheinwerfereinstelleinheit (5) integrierter Stellmittels (16) in die Soll-Position verbracht wird.

2. Verfahren nach Anspruch 1, **dadurch gekennzeichnet, dass** die Ist-Position des Scheinwerfers (1, 1') mit in einem Speicher der Recheneinheit (6) scheinwerfertypabhängig abgespeicherten Soll-Position verglichen und dann die Korrekturposition berechnet wird.

3. Verfahren nach Anspruch 1 oder 2, **dadurch gekennzeichnet, dass** die Ist-Position des Scheinwerfers (1, 1') an mindestens drei Referenzpunkten (15) ermittelt wird.

4. Verfahren nach einem der Ansprüche 1 bis 3, **dadurch gekennzeichnet, dass** nach der Positionierung des Scheinwerfers (1, 1') an dem Montageträger (2) die Verbindungspunkte (10) des Scheinwerfers (1, 1') an den Aufnahmepunkten (9) des Montageträgers (2) justiert und dann fixiert werden.

5. Verfahren nach einem der Ansprüche 1 bis 4, **dadurch gekennzeichnet, dass** die feste Kopplung zwischen der Scheinwerfereinstelleinheit (5) und dem Scheinwerfer (1, 1') nach der Fixierung desselben an dem Montageträger (2) gelöst wird und dass nach der Positionierung sowie vor und/oder nach der Fixierung des Scheinwerfers (1, 1') an dem Montageträger (2) die Ist-Position des Scheinwerfers (1, 1') mittels der Messmittel (14) der Scheinwerfereinstelleinheit (5) erneut erfasst und der Recheneinheit (6) zugeleitet wird, so dass die Korrekturposition erneut berechnet wird.

6. Verfahren nach einem der Ansprüche 1 bis 5, **dadurch gekennzeichnet, dass** die Scheinwerfereinstelleinheit (5) erst von dem Montagegestell (4) dann entfernt wird, wenn die ermittelte Ist-Position des Scheinwerfers (1, 1') vor und/oder nach der Fixierung desselben an dem Montageträger (2) innerhalb eines von der in der Recheneinheit (6) gespeicherten Soll-Position vorgegebenen Lagetoleranzbandes liegt.

7. Verfahren nach einem der Ansprüche 1 bis 6, **dadurch gekennzeichnet, dass** der Scheinwerfer (1, 1') über Vorpositionierungsmittel an dem Montageträger (2) vorpositioniert ist, bevor der Scheinwerfer (1, 1') in eine feste Kopplungsposition mit der Scheinwerfereinstelleinheit (5) verbracht wird.

8. Vorrichtung zur lagerichtigen Montage von Scheinwerfern an einem Montageträger (2) eines Frontends (3) für Fahrzeuge, wobei der Montageträger (2) Befestigungspunkte (7) zur Befestigung desselben an dem Fahrzeug einerseits und Aufnahmepunkte (9) zur Verbindung an Verbindungspunkten (10) des Scheinwerfers (1, 1') andererseits aufweist,
- mit einem Montagegestell (4), an dem der Montageträger (2) über fahrzeuggleiche Befestigungsstellen befestigt ist,
- mit Messmitteln (14) zum Erfassen der Ist-Position des Scheinwerfers,
- mit einer Recheneinheit (6), aus der aus der Soll-Position und der Ist-Position des Scheinwerfers (1, 1') eine Korrekturposition für den Scheinwerfer (1, 1') berechnet wird,
- mit Stellmitteln (16) zum Verbringen des Scheinwerfers (1, 1') unter Vorgabe der von der Recheneinheit (6) bereitgestellten Korrekturposition in die Soll-Position, in der der Scheinwerfer (1, 1') mit dem Montageträger (2) fixierbar ist,
**dadurch gekennzeichnet,**
- **dass** in der Recheneinheit (6) die Soll-Position des Scheinwerfers (1, 1') gespeichert ist;
- **dass** zumindest die Messmittel (14) und die Stellmittel (16) in einer Scheinwerfereinstelleinheit (5) integriert angeordnet sind, wobei die Scheinwerfereinstelleinheit (5) in einer fest vorgegebenen Ausrichtposition im Verhältnis zu dem Montagegestell (4) und dem Scheinwerfer (1, 1') gelagert ist.

9. Vorrichtung nach Anspruch 8, **dadurch gekennzeichnet, dass** die Scheinwerfereinstelleinheit (5) über mechanische Aufnahmemittel (11) verfügt, mittels derer sie in der Ausrichtposition lösbar mit dem Scheinwerfer (1, 1') befestigt ist.

10. Frontend für Fahrzeuge mit einem nach einem der Verfahrensansprüche 1 bis 7 montierten Scheinwerfer (1, 1').

## Claims

1. Method for precision mounting of floodlights (1, 1') on mounting structures (2) of a vehicle front end (3) in a defined position wherein a shell of the floodlight (1, 1') is positioned and fixed on locating points (9) of the mounting structure (2) via connecting points (10) thereof after a tolerance compensation has been calculated, wherein the mounting structure (2) is secured to a mounting frame (4), wherein an actual position of the floodlight (1, 1') is determined and passed to a computing unit (6), and wherein a corrective position is calculated by said computing unit (6) such that the connecting points (10) of the floodlight (1, 1') are brought into a target position relative to said locating points (9) of the mounting structure (2) in which the floodlight (1, 1') is secured to the mounting structure (2), **characterized in that** a floodlight adjusting unit (5) is connected to both the mounting frame (4) and the floodlight (1, 1') via locator lugs (18), that the actual position of the floodlight (1, 1') is initially determined with the aid of measuring means (14) that are integrated in the floodlight adjusting unit (5) and that the floodlight (1, 1') is then brought into target position with the aid of adjusting means (16) that are as well integrated in said floodlight adjusting unit (5).

2. Method according to Claim 1, **characterised in that** the actual position of the floodlight (1, 1') is compared with a target position which is specifically stored, in a memory of the computing unit (6) for any and each different type of floodlight.

3. Method according to Claim 1 or 2, **characterized in that** the actual position of the floodlight (1, 1') is determined via at least three reference points (15).

4. Method according to any of the preceding Claims 1 to 3, **characterized in that** after positioning of the floodlight (1, 1') on the mounting structure (2) the connecting points (10) of the floodlight (1, 1') are aligned with the locating points (9) of the mounting structure (2).

5. Method according to any of the preceding Claims 1 to 4, **characterized in that** the firm fit between the floodlight adjusting unit (5) and the floodlight (1, 1') is released after said latter has been secured to the mounting structure (2) and that after positioning as well as before and/or after fixing of the floodlight (1, 1') to the mounting structure (2) the actual position of the floodlight (1, 1') is again determined with the aid of the measuring means (14) of the floodlight adjusting unit (5) and again passed to the competing unit (6) for the corrective position to be recalculated.

6. Method according to any or the preceding Claims 1 to 5, **characterized in that** the floodlight adjusting unit (5) will not be removed from the mounting frame (4) until the actual position of the floodlight (1, 1') as determined before and/or after fixing to the mounting structure (2) is within a position tolerance range that is predetermined by the target position stored in the computing unit (6).

7. Method according to any of the preceding Claims 1 to 6, **characterized in that** the floodlight (1, 1') be prepositioned on the mounting structure (2) with the aid of prepositoning means before being brought into a firm coupling position with the floodlight adjusting unit (5).

8. Device for precision mounting of floodlights (1, 1') on mounting structures (2) of a vehicle front end (3) in a defined position wherein the mounting structure (2) has fixing points (7) for attachment thereof to the vehicle on one hand and locating points (9) for connection to connecting points (10) of the floodlight (1, 1') on the other hand, said device comprising a mounting frame (4) to which the mounting structure (2) will be secured via vehicle-specific fixing points; measuring means (14) to determine the actual position or the floodlight; a computing unit (6) to calculate a corrective position for the floodlight (1, 1') from the target position and the actual position thereof; and adjusting means (16) to bring the floodlight (1, 1') into a target position on basis of the corrective position assessed by the computing unit (6) in which the floodlight (1, 1') can be secured to the mounting structure (2), **characterized in that** the target position of the floodlight (1, 1') is stored in the computing unit (6) and that the measuring means (14) and the adjusting means (16) at least are integrated in a floodlight adjusting unit (5) which is arranged in a predetermined adjustment position relative to the mounting frame (4) and the floodlight (1, 1').

9. Device according to Claim 8, **characterized in that** the floodlight adjusting unit (5) has mechanical locating means (11) by which it is detachably secured to the floodlights (1, 1') while in adjusting position.

10. Front end for vehicles with floodlights (1, 1') mounted in accordance with the Method Claims 1 to 7.

## Revendications

1. Procédé pour le montage rn position exacte de phares (1, 1') sur un support de montage (2) d'une extrémité frontale (3) de véhicules automobiles, un boîtier du phare (1, 1') étant positionné est fixé à des points de réception (9) du support de montage (2), après calcul d'une compensation de tolérance, par l'intermédiaire de points de raccordement (10) de celui-ci, le support de montage (2) étant fixé à un châssis de montage (4), une position réelle du pare (1, 1') étant détectée et conduite à une unité de calcul (6), et une position de correction étant calculée dans l'unité de calcul (6) de sorte que les points de raccordement (10) du phare (1, 1') soient amenés dans une position prescrite par rapport aux points de réception (9) du support de montage (2), position dans laquelle a lieu la fixation du phare (1, 1') sur le support de montage (2), **caractérisé en ce que**
- une unité de réglage du phare (5) est reliée, d'une part, par l'intermédiaire de butées prédéterminées (18), au châssis de montage (4) et, d'autre part, au phare (1, 1'),
- la position réelle du phare (1, 1') est d'abord détectée au moyen d'organes de mesure (14), intégrés dans l'unité de réglage du phare (5), et
- le phare (1, 1') est ensuite amené dans la position prescrite au moyen d'organes de réglage (16) intégrés dans l'unité de réglage du phare (5).

2. Procédé selon la revendication 1, **caractérisé en ce que** la position réelle du phare (1, 1') est comparé avec la position prescrite, qui est enregistrée dans une mémoire de l'unité de calcul (6), en fonction du type de phare.

3. Procédé selon revendication 1 ou 2, **caractérisé en ce que**, après le positionnement du phare (1, 1') la position réelle du phare (1, 1') est déterminée sur aux moins trois points de référence (15).

4. Procède selon l'une des revendications 1 à 3, **caractérisée en ce que**, après le positionnement du phare (1, 1') sur le support de montage (2), les points de raccordement (10) du phare (1, 1') sont ajustés sur les points de réception (9) du support de montage (2) est fixés ensuite.

5. Procédé selon l'une des revendications 1 à 4, **caractérisée en ce que** le couplage fixe entre l'unité de réglage du phare (5) et le phare (1, 1') est supprimé après la fixation de celui-ci sur le support de montage (2) et qu'après le positionnement, ainsi qu'avant et / ou après la fixation du phare (1, 1') sur le support de montage (2), la position réelle du phare (1, 1') est détectée de nouveau au moyen des organes de mesure (14) de l'unité de réglage du phare (5) et conduite à l'unité de calcul (6), de sorte que la position de correction soit de nouveau calculée.

6. Procédé selon l'une des revendications 1 à 5, **caractérisée en ce que** l'unité de réglage du phare (5) n'est enlevée du châssis de montage (4) que lorsque la position réelle du phare (1, 1'), détectée, avant et / ou après la fixation de celui-ci sur le support de montage (2), est située dans une plage de tolérance de position prédéterminée par la position prescrite mémorisée dans l'unité de calcul (6).

7. Procédé selon l'une des revendications 1 à 6, **caractérisé en ce que** le phare (1, 1') est positionné sur le support de montage (2), par l'intermédiaire des moyens de positionnement préalable, avant que ledit phare (1, 1') soit amené dans une position de couplage fixe avec l'unité de réglage du phare (5).

8. Dispositif pour le montage rn position exacte de phares sur un support de montage (2) d'une extrémité frontale (3) pour véhicules automobiles, un support de montage (2) présentant, d'une part, des points de fixation (7) pour la fixation de celui-ci sur le véhicule automobile, et, d'autre part, des points de réception (9) pour la fixation an des points de raccordement (10) du phare (1, 1'),
- avec un châssis de montage (4), auquel le support de montagne (2) est fixé par l'intermédiaire de points de fixation identiques à ceux du véhicule",
- avec des organes de mesure (14) pour la détection de la position réelle du phare,
- avec une unité de calcul (6), au moyen de laquelle une position de correction est calculée pour le phare (1, 1') sur la base de la position prescrite et de la position réelle du phare (1, 1'),
- des organes de réglage (16) pour amener, en fonction de la position de correction délivrée par l'unité de calcul (6), le phare (1, 1') dans la position prescrite, dans laquelle ledit phare (1, 1') peut être fixé avec le support de montage (2),
**caractérisé en ce que**,
- la position prescrite du phare (1, 1') est mémorisée dans l'unité de calcul (6),
- les organes de mesure (14) et les organes de réglage (16) au moins sont intégrés dans une unité de réglage de phare (5), ladite l'unité de réglage de phare (5) étant montée dans une position d'ajustage prédéterminée par rapport au châssis de montage (4) est au phare (1, 1').

9. Dispositif selon la revendication 8, **caractérisé en ce que** l'unité de réglage du phare (5) dispose de moyens de réception mécaniques (11), au moyen desquels elle est fixée, de manière amovible, dans la position d'ajustage, avec le phare (1, 1').

10. Extrémité frontale pour véhicules automobiles avec un phare (1, 1'), qui est monté selon l'une des revendications de procédé 1 à 7.
